# DEMANDE DE BREVET EUROPEEN

(11) **EP 4 435 552 A1**
(43) Date de publication de la demande: **25.09.2024**
(21) Numéro de dépôt: 24165664.4
(22) Date de dépôt: 22.03.2024
(51) Int. Cl.: G05D 16/20

(54) **RÉGULATEUR DE PRESSION ATMOSPHÉRIQUE POUR HABITAT**

(30) Priorité: 24.03.2023 FR 2302848
(71) Demandeur: Leclerc, Michel, 28210 Villemeux-sur-Eure (FR)
(72) Inventeur: Leclerc, Michel, 28210 Villemeux-sur-Eure (FR)
(74) Mandataire: Oak & Fox

(57) **Abrégé**

Système de régulation des variations de pressions atmosphériques caractérisé en ce qu'il porte un aspirateur d'air (A₁) et une souffleuse d'air (S₁) et un capteur de pression (C₁, C₂) mesurant une pression à intervalles réguliers et délivrant ladite mesure à un calculateur de manière à enregistrer lesdites valeurs dans une mémoire d'un équipement électronique, caractérisé en ce que ledit système de régulation comprend une unité de commande (UC₁) pour activer l'aspirateur (A₁) ou le souffleur (S₁) selon le dépassement de la valeur de pression mesuré avec un premier seuil de pression ou un second seuil de pression, lesdits seuils étant déterminés pour assurer le maintien d'une pression mesuré dans une première gamme de [980 ; 1050 hPa].

## Description

### Domaine de l'invention

L'invention concerne le domaine des régulateurs de pression pour habitat. Plus particulièrement, le domaine de l'invention se rapporte aux régulateurs permettant de maintenir la pression stable dans un habitat.

### État de la technique

Il existe des régulateurs de pression intégrés dans différents équipements industriels, le plus souvent pour contrôler la pression d'un fluide dans un circuit fluidique afin d'obtenir un rendement ou une performance thermodynamique. Toutefois, ces régulateurs ne sont pas conçus pour assurer une pression atmosphérique avec une précision de l'ordre de la dizaine de millibars.

Il existe également des régulateurs de pressions atmosphériques par exemple pour assurer la pression dans un aéronef, toutefois ces régulateurs ne permettent pas d'assurer une pression stable ne variant pas au-delà d'une centaine de millibars.

Il existe un besoin de fournir un régulateur de pression pour les habitats afin d'assurer une stabilité de la pression atmosphérique.

### Résumé de l'invention

Selon un aspect, l'invention concerne un système de régulation des variations de pressions atmosphériques porte un aspirateur d'air et une souffleuse d'air et un capteur de pression mesurant une pression à intervalles réguliers et délivrant ladite mesure à un calculateur de manière à enregistrer lesdites valeurs dans une mémoire d'un équipement électronique, ledit système de régulation comprenant une unité de commande pour activer l'aspirateur et/ou le souffleur selon le dépassement de la valeur de pression mesuré avec un premier seuil de pression et/ou un second seuil de pression, lesdits seuils étant déterminés pour assurer le maintien d'une pression mesurée dans une première gamme de [980 ; 1050 hPa].

Autrement dit selon cet aspect, l'invention comprend un système de régulation des variations de pressions atmosphériques caractérisé en ce qu'il comporte un aspirateur d'air et une souffleuse d'air et un capteur de pression mesurant une pression à intervalles réguliers et délivrant ladite mesure à un calculateur de manière à enregistrer lesdites valeurs dans une mémoire d'un équipement électronique, caractérisé en ce que ledit système de régulation comprend une unité de commande pour activer l'aspirateur lorsque la pression mesurée est supérieure à un premier seuil de pression et pour activer le souffleur lorsque la pression mesurée est en dessous d'un second seuil de pression, lesdits seuils étant déterminés pour assurer le maintien d'une pression mesurée dans une première gamme de [980 ; 1050 hPa] dont les bornes correspondent respectivement au second seuil et au premier seuil.

Selon un autre aspect, l'invention comprend un système de régulation des variations de pressions atmosphériques caractérisé en ce qu'il comporte un aspirateur d'air et une souffleuse d'air et un capteur de pression mesurant une pression à intervalles réguliers et délivrant ladite mesure à un calculateur de manière à enregistrer lesdites valeurs dans une mémoire d'un équipement électronique, caractérisé en ce que ledit système de régulation comprend une unité de commande pour activer l'aspirateur lorsque la pression mesurée est supérieure à un premier seuil de pression et pour activer le souffleur lorsque la pression mesurée est en dessous d'un second seuil de pression, lesdits seuils étant déterminés pour assurer le maintien d'une pression mesurée dans une première gamme de [-35 ; +35 hPa] autour de la pression atmosphérique mesurée à l'altitude à laquelle est située le système, lesdites bornes additionnées à la pression atmosphérique mesurée correspondent respectivement au second seuil et au premier seuil.

Un avantage est de permettre de maintenir une pression stable autour d'une pression atmosphérique de référence dans un habitat indépendamment des variations de pressions pouvant être induites pour différentes raisons, telles que les conditions environnementales associées par exemple à la température, au vent ou encore à l'humidité ou encore toute cause possible.

Un avantage est de maintenir une pression de l'environnement stable et constante autour de la pression atmosphérique pour réduire les pathologies ou les effets indésirables pour la santé d'un homme ou d'une femme. En effet, lorsque des variations de la pression extérieure ou lorsque la pression est supérieure ou inférieure au-delà d'un seuil vis-à-vis de la pression atmosphérique calculée au niveau de la mer ont des effets sur la santé d'un individu, le système de l'invention permet de réguler la pression dans un espace donné. Cet espace peut être fermé ou partiellement ouvert par une porte ou une fenêtre.

Enfin l'invention permet de maintenir également une pression stable autour d'une pression atmosphérique pour réaliser des expériences nécessitant une telle stabilité de la pression.

Selon un mode de réalisation, le capteur de pression est un pressostat ou un baromètre.

Selon un mode de réalisation, les seuils sont déterminés pour assurer le maintien d'une pression dans une seconde gamme de [1005 ; 1025 hPa]. Cette gamme pouvant être adaptée à la pression atmosphérique mesurée à l'altitude à laquelle se situe le système, par exemple sensiblement entre -10 hPa et + 10hPa.

Selon un mode de réalisation, les seuils sont déterminés pour assurer le maintien d'une pression dans une seconde gamme de [1010 ; 1020 hPa].

Selon un mode de réalisation, l'aspirateur est alimenté par une source d'énergie dont la gamme de puissance est comprise dans la gamme : [1200 ; 1600 Watts].

Selon un mode de réalisation, le souffleur est alimenté par une source d'énergie dont la gamme de puissance est comprise dans la gamme : [1100 ; 1300 Watts].

Selon un mode de réalisation, l'unité de commande comprend une interface de communication permettant de recevoir une donnée numérique d'état provenant d'au moins un capteur mesurant l'ouverture ou la fermeture d'une fenêtre ou d'une porte, ladite unité de commande activant ou désactivant le système de régulation selon la valeur d'état mesurée.

Selon un mode de réalisation, le système de régulation comprend un terminal électronique comportant une interface sans fil, ladite interface sans fil permettant d'associer des configurations d'allumage ou d'éteinte automatique du système de régulation ou d'un ou plusieurs équipements du système de régulation selon une valeur d'une consigne numérique générée à partir de la mesure d'un capteur d'état.

Selon un mode de réalisation, le système de régulation comprend une console de paramétrage comportant un afficheur, un calculateur et une mémoire, ladite console de paramétrage permettant de configurer la largeur de la gamme de pression définissant le premier seuil et le second seuil.

Un avantage est de permettre un réglage de la sensibilité du système afin que les équipements ne soient pas sollicités dans leur fonctionnement avec une dynamique trop importante. Ce cas de figure peut dépendre des conditions atmosphériques, de la topologie de la pièce dans laquelle est installée le système ou des entrées et sorties d'air.

Selon un mode de réalisation, la console de paramétrage permet de configurer la consigne de pression atmosphérique selon l'altitude à laquelle est positionnée le système.

Un avantage est de permettre d'adapter le système à des habitations en altitude.

Selon un mode de réalisation, une position et/ou une altitude du système est/sont configurée(s) et qu'un calcul automatique de la pression atmosphérique et d'une gamme de valeurs du premier seuil et du second seuil est automatiquement calculée pour la consigne de pression atmosphérique définie. Un avantage est de permettre un auto-étalonnage du système selon l'endroit où il est installé.

Selon un mode de réalisation, le système de régulation comporte au moins deux capteurs de pressions agencés dans deux pièces différentes, et au moins deux ensembles, chaque ensemble comportant une souffleuse d'air et un aspirateur d'air, l'unité de commande asservissant le fonctionnement de chaque équipement de chaque ensemble selon le résultat d'une comparaison entre la pression mesurée à intervalles réguliers de chaque capteur de pression et des seuils de deux gammes de pressions associés à chaque capteur de pression, les deux gammes pouvant être configurées avec des bornes différentes. Un avantage est de permettre une configuration d'un système de l'invention selon un déploiement d'équipements dans une pluralité de pièce.

### Brève description des figures

D'autres caractéristiques et avantages de l'invention ressortiront à la lecture de la description détaillée qui suit, en référence aux figures annexées, qui illustrent :
Figure 1 : un exemple de mise en oeuvre d'un système de régulation de pression de l'invention ;
Figure 2 : un mode de réalisation d'un système de régulation de pression de l'invention mettant en oeuvre un transformateur et au moins un relais ou un système de relais.
Figure 3 : un mode de réalisation d'un système de régulation de pression de l'invention mettant en oeuvre une horloge pour le pilotage de plages d'horaires de fonctionnement et des relais pour activer un contacteur et des électrovannes.
Figure 4 : un exemple de réalisation d'un système de l'invention.

### Description de l'invention

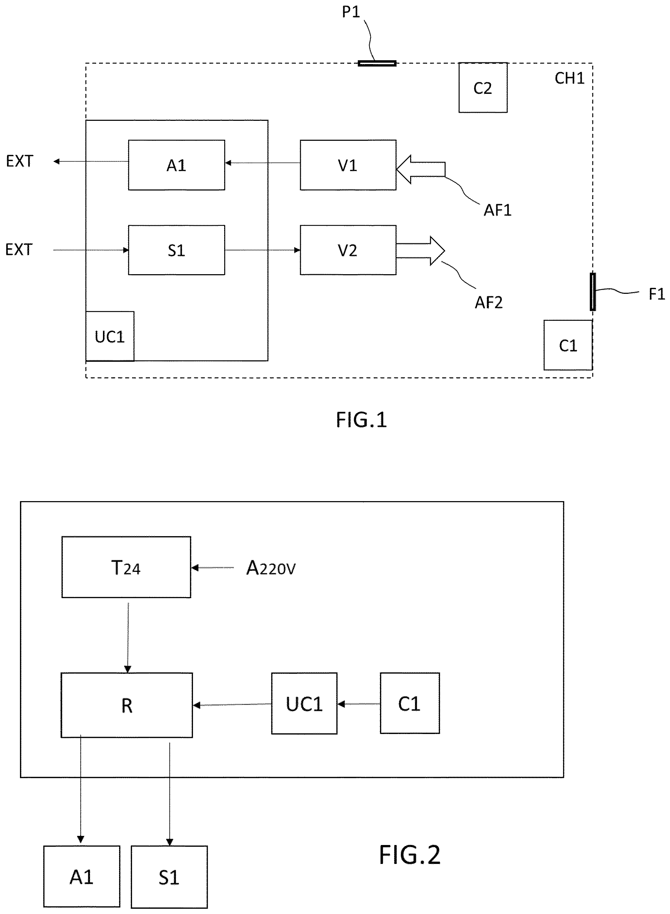

La figure 1 représente un exemple de mise en oeuvre du système de régulation de pression de l'invention.

Le système comprend un module d'aspiration d'air, également appelé aspirateur, il est noté « A1 » sur la figure 1. Selon un exemple, l'aspirateur A1 a une puissance supérieure à 800W. Par exemple, une gamme de fonctionnements de puissance peut être comprise entre 1200 et 1600 Watts. La puissance de l'aspirateur A1 peut être déterminée selon le volume de la pièce à équilibrer en pression. Selon un autre mode de réalisation, une pluralité d'aspirateurs est installée en différentes positions d'une pièce ou d'une pluralité de pièces lorsque le lieu à réguler en pression comprend plusieurs pièces. Les aspirateurs peuvent être fixés au mur ou être mobiles dans un lieu.

Selon un exemple, l'aspirateur A1 est configuré pour aspirer de l'air dans la pièce et acheminer le flux en dehors de la pièce.

Le système comprend un module de soufflage d'air, également appelé souffleur, il est noté « S1 » sur la figure 1. La puissance du souffleur S1 est préférentiellement supérieure à 800 Watts. Par exemple, une gamme de fonctionnements de puissance peut être comprise entre 1200 et 1600 Watts. La puissance du souffleur peut être déterminée selon le volume de la pièce à équilibrer en pression et selon l'aspirateur ou les aspirateurs au(x)quel(s) il est associé de manière à mutualiser par exemple la source d'alimentation pour les différents équipements. Selon un autre mode de réalisation, une pluralité de souffleurs est installée en différentes positions d'une pièce ou d'une pluralité de pièces lorsque le lieu à réguler en pression comprend plusieurs pièces. Les souffleurs peuvent être fixés au mur ou être mobiles dans un lieu. Selon un exemple, ils sont disposés et agencés dans le même bâti que l'aspirateur.

Selon un exemple, le souffleur S1 est configuré pour souffler de l'air dans la pièce et prélever le volume d'air soufflé depuis l'extérieur de la pièce.

Le système comprend au moins un capteur de pression, noté C₁, positionné dans la pièce dans laquelle on souhaite réguler la pression ambiance. Le capteur de pression C₁ peut être également appelé pressostat ou baromètre. Selon un exemple de réalisation de l'invention, une pluralité de capteurs est positionnée en différents endroits de la pièce à réguler. Les différents capteurs peuvent être agencés dans différents coins d'une pièce, au plafond ou à proximité d'une ouverture. La figure 1 représente un exemple dans lequel un second capteur C₂ est agencé à proximité d'une fenêtre F₁, tandis que le premier capteur C₁ est agencé à proximité d'une porte Pi.

Le ou les capteurs C₁, C₂ sont préférentiellement connectés à une unité de commande UC₁. L'unité de commande UC₁ peut être associée à l'aspirateur A1, ou au souffleur S1 ou encore aux deux équipements lorsqu'ils sont intégrés dans un même bâti. La liaison entre le capteur C₁ et l'unité de commande peut être une liaison filaire, électrique ou encore une liaison sans fil tel qu'une liaison Bluetooth, Lora, Wifi, 4G, 3G ou GPR ou tout autre protocole de liaison de données sans fil permettant un échange entre une interface de données d'un capteur et une interface de communication configurée pour être exploitée par l'unité de commande UC₁.

Le capteur de pression C₁ est préférentiellement choisi de sorte à avoir une sensibilité de mesure autour de la pression atmosphérique de référence, c'est-à-dire autour de 1013,25 hPa, notée Pₐₜₘ. Une telle pression représente la pression atmosphérique de l'air dont on rappelle qu'il s'agit de la pression qu'exerce l'air sur une surface quelconque mesurée au niveau de la mer.

Les capteurs de pression ont préférentiellement une sensibilité de l'ordre de l'hectopascal ou de l'ordre de quelques hectopascals. En effet, les capteurs sont associés avec un régulateur de pression pour maintenir une pression dans une pièce dans une première gamme G₁ de pression définie entre les valeurs seuils de pression : 1005 et 1025 hPa.

L'unité de commande permet de recevoir les pressions mesurées en entrée à des intervalles réguliers et de commander ou piloter des équipements activant ou désactivant les fonctions d'aspiration de l'aspirateur A1 ou de soufflage du souffleur S1.

A cet effet, l'unité de commande génère un discret, c'est-à-dire une consigne numérique selon la mesure de la pression. Dans l'exemple d'une régulation paramétrée pour maintenir la pression d'une pièce entre 1010 et 1015 hPa, c'est-à-dire dans une gamme étroite G₂ comprise dans la première gamme G₁, l'unité de commande permet de comparer la pression mesurée au seuil bas de 1010 hPa et au seuil haut de 1015 hPa.

Lorsque la pression mesurée est inférieure au seuil bas, la consigne numérique permet d'activer le souffleur S1 de manière à augmenter la pression dans la pièce.

Lorsque la pression mesurée est supérieure au seuil bas, la consigne numérique permet d'activer l'aspirateur A1 de manière à diminuer la pression dans la pièce.

Un avantage de l'invention est de maintenir une pression dans une pièce ou plus généralement dans un lieu au sein d'une gamme de pression étroite autour de la pression atmosphérique de référence Pₐₜₘ. Cela permet de réduire les variations de pressions dans les endroits où d'autres variables physiques sont amenées à varier telles que :
- l'humidité, par exemple dans un environnement marin,
- l'altitude, par exemple dans un aéronef,
- des vents ou plus généralement de la météorologie selon les régions plus ou moins sujettes aux variations climatiques ;
- la topologie du relief, selon si l'on se trouve dans un couloir favorisant des courants ou vents ou si l'on se trouve à proximité de crêtes ou de sommets de montagnes favorisant des turbulences à la croisée de différents vents provenant de différentes directions ;
- l'ensoleillement selon la saison ou la météo, la latitude et longitude et l'altitude du lieu considéré ;
- la capacité thermique de la surface terrestre qui dépend possiblement de la composition de la terre et sa capacité à varier selon les variations climatiques.

Le maintien de la pression avec une stabilité dans une gamme étroite autour de la pression atmosphérique de référence Pₐₜₘ permet une meilleure homogénéité dans le temps de la pression appliquée sur le corps humain. Notamment, les variations de pressions appliquées aux cellules humaines restent circonscrites à des valeurs stables autour d'une valeur de référence. Cette régulation évite des pressions trop fortes appliquées aux cellules du corps humain.

Selon un mode de réalisation, le ou les aspirateur(s) et le ou les souffleur(s) sont associés à des clapets anti-retours de sorte à favoriser le transfert d'un flux dans un unique sens. La figure 1 représente à titre d'exemple un premier clapet anti-retour V₁ associé à l'aspirateur A1. Ainsi, le flux d'air aspiré dans la pièce transite via le clapet antiretour V₁ et est acheminé vers l'extérieur, zone notée EXT sur la figure 1. La figure 1 représente à titre d'exemple un second clapet anti-retour V₂ associé au souffleur S1. Ainsi, le flux d'air aspiré à l'extérieur EXT et soufflé dans la pièce transite via le clapet antiretour V₂.

Selon chaque voie d'aspiration ou de soufflage, des clapets anti-retours V₁, V₂ peuvent être agencés en amont ou en aval de chaque équipement A, S. Les clapets peuvent être des clapets électriques commandés à partir d'une consigne électrique par une source d'alimentation.

Selon un exemple de mise en oeuvre électrique de l'invention, des relais électromécaniques R, tel que celui représenté à la figure 2, sont installés de manière de distribuer la puissance aux équipements A1, S1 à partir d'un ordre émis par l'unité de commande UC₁, l'ordre étant généré selon la ou les mesures du ou des capteur(s) de pression. Préférentiellement, le ou les relais permet(tent) l'ouverture et la fermeture d'un circuit électrique de puissance à partir d'une information logique. Les 2 circuits, puissance et information, sont préférentiellement isolés. Selon un exemple, les contacteurs/ disjoncteurs ont une intensité de 15A. Selon un exemple de mise en oeuvre, le circuit électrique de l'invention comporte, en outre, un interrupteur de secours. Selon un exemple, des transformateurs, tels que le transformateur T₂₄ de la figure 2, peuvent être utilisés de sorte à convertir une puissance électrique d'une source A_{220V} domestique à 220V à un voltage de fonctionnement des équipements, par exemple 24V. Selon un autre exemple, les équipements peuvent fonctionner directement sur une tension de 220V par exemple pour des équipements industriels.

L'invention peut être mise en oeuvre selon différentes configurations.

Selon une première configuration, l'invention permet d'aspirer de l'air depuis l'extérieur de la pièce, par exemple à l'extérieur. A cet effet, la prise d'air est traversante dans le bâtiment, c'est-à-dire à travers une cloison, un mur, une paroi. De manière préférentielle, une ouverture est utilisée telle qu'une ouverture réalisée pour une ventilation mécanique contrôlée ou tout autre type d'ouverture.

De manière similaire, le souffleur S1 peut acheminer de l'air prélevé à l'extérieur EXT à l'intérieur de la pièce. A cet effet, une ouverture traversante d'une paroi, d'un mur ou d'une cloison peut être installée.

Les ouvertures réalisées, que ce soit pour l'aspirateur ou pour le souffleur, sont préférentiellement fermées de sorte à maintenir une bonne étanchéité entre l'intérieur et l'extérieur de la pièce. Selon un mode de réalisation, des joints sont installés afin de rentre l'installation parfaitement étanche de bout en bout du circuit fluidique.

Selon une seconde configuration, compatible de la première configuration, d'autres capteurs peuvent être installés et être pris en compte par l'unité de commande UC₁.

Selon un premier exemple, un capteur de lumière ou un capteur récupérant l'état d'un interrupteur de lumière peut être pris en compte par l'unité de commande UC₁. Un intérêt est de désactiver le système de régulation lorsque la lumière est éteinte. Cette situation est intéressante lorsque plus personne n'est dans la pièce.

Selon un autre exemple, le système de régulation peut être activer automatiquement lorsque la lumière est éteinte. Cette situation est intéressante lorsqu'une personne dort dans une pièce et que la régulation est maintenue dans la nuit.

Selon un exemple, le système de l'invention comprend une interface utilisateur accessible depuis un terminal électronique tel qu'un ordinateur, une tablette, ou un Smartphone. Le terminal électronique peut comprendre une interface sans fil pour piloter à distance et configurer l'unité de commande UC₁ du système de régulation. L'interface utilisateur permet avantageusement de programmer une configuration de régulation de pression prenant en considération l'allumage ou l'éteinte de la régulation dans une pluralité de pièce et en prenant en compte une pluralité de capteurs.

Ainsi, il est possible de commander la régulation d'une pièce selon d'autres paramètres de configuration qu'une autre pièce d'une maison ou d'un appartement ou de locaux.

Selon un autre mode de réalisation, des détecteurs d'ouverture de porte ou de fenêtre peuvent être pris en compte par l'unité de commande. Ainsi, il est possible d'arrêter ou d'allumer automatiquement le système de régulation dès lors qu'une porte ou une fenêtre est ouverte ou fermée. Cette solution permet de compenser les effets d'une dépression ou une surpression lorsqu'une porte ou une fenêtre est ouverte selon un premier cas. Selon un second cas, l'ouverture d'une porte ou d'une fenêtre permet de désactiver le système temporairement afin d'éviter une surconsommation dans des périodes transitoires.

Selon un exemple, le système de régulation comprend un organe de récupération d'énergie. Ce dernier peut être une coupole de régulation d'énergie.

Selon un mode de réalisation, le système de régulation comprend un capteur de pression fixé dans une première pièce. Le capteur de pression est par exemple un baromètre électrique. Ce dernier peut être par exemple alimenté par une pile ou une batterie ou être alimenté directement sur une prise d'alimentation secteur, éventuellement au moyen d'un transformateur.

Ce dernier capteur de pression commande automatiquement un relais électrique permettant d'activer ou non l'aspirateur d'air ou le souffleur d'air, par exemple au moyen d'une électrovanne. On rappelle que l'aspirateur d'air est également considéré comme un extracteur d'air.

Selon un mode de réalisation, le système de l'invention comprend un afficheur d'une console de paramétrage. Ce dernier afficheur peut être fixé à un mur, un meuble ou tout équipement comportant une surface d'accueil. L'afficheur comprend une fonction permettant d'afficher la pression en temps réel de chaque capteur de pression raccordé au système. Selon un exemple de réalisation, l'afficheur comprend une représentation en deux dimensions d'un étage d'une maison ou d'un appartement. Selon un autre exemple, une représentation en 3D est affichée du lieu comportant le système de l'invention. Un intérêt est de permettre de visualiser l'ensemble des pièces d'un lieu et d'afficher dans chaque pièce la pression courante. Ainsi, selon un exemple, lorsqu'un niveau de pression d'une pièce dépasse un seuil ou descend en-dessous d'un seuil, l'invention permet d'entrainer le fonctionnement automatiquement du souffleur ou de l'aspirateur d'air. En outre, l'afficheur peur représenter l'ensemble des ouvertures entre les pièces d'un lieu.

Selon un mode de réalisation, le système comprend des contacteurs mécaniques de porte permettant de vérifier qu'au moins une porte entre deux pièces est ouverte ou fermée. Un intérêt est de déclencher une alerte soit sous la forme sonore, soit sous la forme d'un symbole affiché sur l'écran pour représenter une ouverture entre deux pièces lorsqu'un capteur détecteur un franchissement d'un seuil, un seuil bas ou un seuil haut.

Un avantage est de permettre à un individu de fermer une porte ou une fenêtre afin d'accélérer le rééquilibrage de la pression autour de la consigne de pression atmosphérique dans une pièce.

Selon un mode de réalisation, l'afficheur comprend une commande ON/OFF permettant d'arrêter le système et notamment la détection des pressions par les capteurs et le fonctionnement du ou des souffleurs et le fonctionnement du ou des aspirateurs.

Selon un mode de réalisation, l'afficheur et au moins un calculateur et une mémoire permettent de programmer des plages horaires de fonctionnement. A titre d'exemple, un mode permet de mettre le système en veille pendant des heures d'absences ou des jours de vacances pendant lesquel(le)s le lieu dans lequel est installé le système n'est pas occupé.

Selon un mode de réalisation, l'afficheur et au moins un calculateur et une mémoire permettent de programmer des plages de seuils de pression d'au moins un capteur selon des heures prédéfinies. Selon un exemple, il est possible de configurer une première gamme le matin et une seconde gamme le soir. Une telle configuration permet d'adapter la tolérance aux variations de pression pendant la journée et la nuit. Typiquement, lorsque des variations importantes de pressions ont lieues, par exemple du fait du climat susceptible de changer brutalement, par exemple à cause du vent, de la chaleur ou de l'humidité, il peut être avantageux de configurer des gammes plus grandes afin d'éviter d'entrainer le déclenchement du souffleur et/ou l'aspirateur d'air trop souvent.

Selon un mode de réalisation, l'afficheur et au moins un calculateur et une mémoire permettent de programmer différents capteurs de pression agencés dans différentes pièces avec des gammes de seuils différentes. Un intérêt de définir des consignes de fonctionnement et de déclenchement des souffleurs et/ou aspirateurs d'air de manière différenciée dans différentes pièces. Dans ce dernier cas, le système comprend avantageusement une pluralité de souffleurs, d'aspirateurs et de détecteur de pression répartis dans un lieu donné. L'afficheur permet de représenter la pression courante dans une pluralité de pièces dans lesquelles sont installés des détecteurs de pression.

Selon un mode de réalisation, le souffleur et l'aspirateur d'air sont agencés dans un même bâti. Le bâti peut être un coffret avec deux ouvertures notamment pour les passages d'air, préférentiellement 4 ouvertures dont deux pour l'aspirateur et deux pour le souffleur. Selon un mode de réalisation, le coffret est insonorisé de manière à réduire le bruit produit par l'un des deux équipements selon lequel est en fonctionnement. L'insonorisation peut être réalisé par une mousse, une plaque aluminium ou encore une plaque ou un panneau de dibond, c'est-à-dire deux couches d'aluminium comportant entre elles une couche formant un noyau en polyéthylène ou minéral.

Selon un mode de réalisation, une configuration de l'altitude à laquelle se situe le système est réalisée au moyen de l'afficheur. L'altitude correspond notamment au lieu dans lequel est installé le système. Selon un exemple, la configuration d'une position, par exemple la latitude et la longitude permet de déduire l'altitude à laquelle se situe le système. A cet effet, une base de données référençant les altitudes de chaque position peut être interrogée automatiquement lors de la configuration.

Selon un mode de réalisation, le système comprend une interface de communication permettant d'interroger une base de données distante, par exemple hébergée sur un serveur distant. Selon un exemple de réalisation, une puce GPS ou tout autre système de localisation peut être utilisée pour récupérer la position du système et déduire l'altitude du lieu.

Selon un exemple de réalisation, la position est récupérée à partir d'une communication 4G par une information provenant d'une borne GSM ou LTE.

Un avantage du système de l'invention est de permettre de configurer une gamme de fonctionnement et la consigne de pression selon l'altitude courante du système. Par exemple, si l'altitude est de 100m, la pression atmosphérique est de 1001,3 hPa. Le calculateur peut alors proposer automatiquement une consigne de pression atmosphérique corrigée dans le système afin d'assurer une valeur de pression à l'intérieur de la pièce comprise entre 990 hPa et 1010 hPa.

Selon un exemple de réalisation, une table comportant l'ensemble des valeurs de pressions atmosphériques pour un ensemble d'altitudes est enregistrée dans une mémoire du système. Selon un premier mode, chaque valeur de pression atmosphérique est associée à une gamme de valeurs de pressions prédéfinies définissant un seuil bas et seuil haut. Selon un autre mode de réalisation, une règle de calcul est appliquée pour transposer une gamme de pression définie autour de la pression atmosphérique 1013 hPa pour l'adapter automatiquement à une autre pression atmosphérique dont la valeur dépendra de l'altitude du système. Selin un autre exemple, une gamme de pression prédéfinie de 10 hPa autour de la pression atmosphérique est prédéfinie. La gamme de pressions peut avoir différentes largeurs par exemple de 5 hPa, 10 hPA, 15 hPA ou encore de 20 hPa ou de 30 hPa. D'autres largeurs de gammes de pressions peuvent être définies à partir de l'afficheur de la console de paramétrage.

Selon un mode de réalisation, une mesure électrique d'un discret d'un équipement, le souffleur ou l'aspirateur d'air, est contrôlée de sorte à vérifier le fonctionnement d'un équipement. La mesure peut être une mesure d'un niveau électrique ou d'une donnée digitale, telle qu'une variable d'état retournée lors du fonctionnement d'un équipement. Lorsqu'un équipement est en fonctionnement, un contrôleur vérifie que le second équipement est bien en veille ou éteint ou hors de fonctionnement. Lorsqu'un contrôleur de fonctionnement détecte le fonctionnement de deux équipements de manière simultanée, alors le système de l'invention est mis en veille ou en arrêt automatiquement. Un intérêt de ce contrôle est d'éviter que le souffleur expulse de l'air dans une pièce alors que l'aspirateur d'air extrait un volume d'air de cette même pièce.

Selon un exemple de réalisation, lors d'une extraction d'air par l'aspirateur, une première électrovanne est ouverte pour extraire un volume d'air d'une pièce. Dans ce cas de figure la première électrovanne est agencée entre l'aspirateur et une première ouverture débouchante dans la pièce à réguler. La première électrovanne peut être pilotée pour se refermer automatiquement lorsque la pression mesurée dans la pièce atteint la consigne de pression atmosphérique, ou une pression au voisinage. Dans cet exemple, le signal d'ouverture et/ou de fermeture de la première électrovanne peut être comparée au signal de fermeture et/ou d'ouverture d'une seconde électrovanne agencée entre le souffleur et une seconde ouverture débouchante dans la pièce.

Préférentiellement, les ouvertures débouchantes dans la pièce à réguler sont réalisée dans le mur de manière à s'intégrer à la pièce. De manière préférentielle, le coffret insonorisé comportant le souffleur et l'aspirateur d'air est agencé dans le mur au voisinage d'une connexion électrique permettant d'alimenter les équipements dans le coffret simplement.

Selon un exemple de réalisation, lorsqu'une consigne d'éteinte du système est reçue, les moteurs de chaque équipement sont arrêtés et les électrovannes sont fermées.

Selon un exemple de réalisation, le système comprend une interface de communication telle qu'une interface WIFI, GSM, 3G ou 4G ou encore LORA ou Bluetooth de manière à permettre d'échanger des données avec un serveur distant accessible depuis un réseau de données tel qu'internet. Selon un mode de réalisation, cette liaison permet de restituer un état de fonctionnement à un serveur distant. Ainsi de cette manière, l'état du système est consultable et contrôlable à distance à partir d'une console distante. Un avantage est de permettre de contrôler le système ou de le piloter à partir d'une tablette numérique ou d'un téléphone intelligent.

Dans ce dernier exemple de réalisation, le système comprend une console distante permettant de piloter le système, c'est-à-dire son état marche/arrêt ou sa configuration telle que la consigne de pression atmosphérique associée à chaque détecteur de pression, les gammes de pression comportant un seuil bas et un seuil haut, qui si ils sont franchis dans un premier sens, respectivement dans un second sens entraine le fonctionnement du souffleur, respectivement de l'aspirateur d'air.

Selon un exemple, le détecteur de pression est un capteur de pression atmosphérique avec affichage, ledit détecteur ayant une sortie électrique de 4 à 20mA.

Selon un exemple, l'aspirateur d'air et le souffleur d'air sont intégrés au sein d'un même composant extracteur-ventilateur double sens installé dans un caisson isolé.

Selon un exemple de réalisation, le capteur de pression est un baromètre étalonnable. Il peut comprendre une sortie active et plusieurs plages de mesure. Il peut comprendre un écran d'affichage de la pression mesurée ou bien ne pas comprendre d'écran. Toutefois, le mode de réalisation dans lequel, le capteur de pression intègre un écran permet de discriminer une erreur de fonctionnement du système lorsqu'un équipement se met en route et que la pression affichée est dans une gamme de fonctionnement entre les deux seuils de pression configurés. Le capteur de pression peut comprendre avantageusement un boitier, par exemple en plastique, avec un moyen de fixation afin de le fixer sur un pur par exemple. Selon un exemple, le capteur de pression comprend un élément de mesure piézorésistif à compensation de température afin de garantir une précision élevée. Selon un exemple, un capteur de pression peut être alimenté en tension avec une entrée 24V CA/CC.

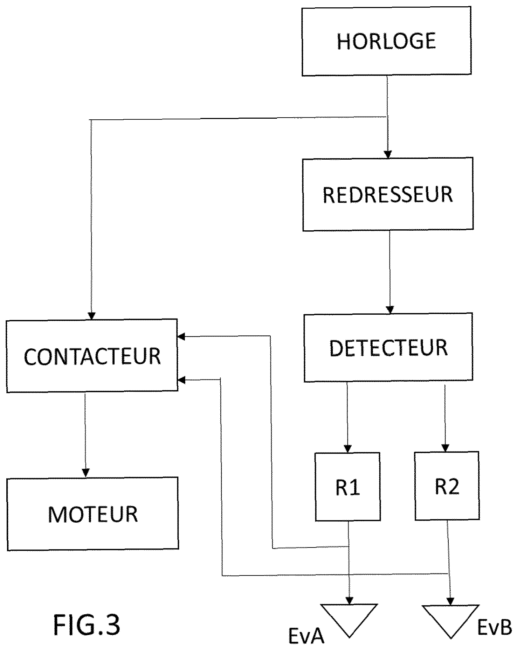

La figure 3 représente un mode de réalisation dans lequel une horloge permet de paramétrer des plages de fonctionnement. Selon un exemple, le système peut être configuré pour être mis en route que la nuit sur des plages horaires prédéfinies, par exemple entre 22h et 8h du matin. L'horloge permet de générer un indicateur numérique ou analogique vers une alimentation, par exemple 12V, qui est ici représentée par un redresseur. Le redresseur alimente le détecteur qui n'est alors alimenté que pendant les plages horaires prédéfinies. Parallèlement, l'horloge peut également émettre un indicateur numérique ou analogique vers un ou plusieurs contacteurs permettant d'alimenter le ou les moteurs de l'aspirateur d'air et du souffleur. Le contacteur de la figure 3 est noté CONTACTEUR.

Lorsque le détecteur, noté DETECTEUR sur la figure 3, détecte une pression en dehors de la gamme de pressions prédéfinie alors une commande est émise vers des relais représenté ici par R1 et R2 selon le seuil qui est dépassé, le seuil bas de pression ou le seuil haut de pression de la gamme de pression prédéfinie. On note que le détecteur de la figure 3 peut correspondre au capteur de pression C₁ de la figure 1. On note également que les deux relais R1 et R2 peuvent correspondre à des relais notés R sur la figure 2. Ces derniers relais R1 et R2 permettent chacun d'alimenter une électrovanne représentée ici par EvA et EvB sur la figure 3 et d'alimenter le contacteur pour engager le fonctionnement du moteur du souffleur ou de l'aspirateur.

Dans le cas d'exemple, une alimentation du relai R1 permet d'ouvrir l'électrovanne EvA et de commander le contacteur pour alimenter par exemple le souffleur. Après la mise en route du souffleur, lorsque la pression ambiante mesurée par le détecteur revient dans la plage de pressions définie par la première gamme de pressions, alors le relais R1 n'est plus alimenté et l'électrovanne EvA se referme.

Dans le cas d'exemple, une alimentation du relai R2 permet d'ouvrir l'électrovanne EvB et de commander le contacteur pour alimenter par exemple l'aspirateur d'air. Après la mise en route de l'aspirateur d'air, lorsque la pression ambiante mesurée par le détecteur revient dans la plage de pressions définie par la première gamme de pressions, alors le relais R2 n'est plus alimenté et l'électrovanne EvB se referme.

Dans l'exemple de la figure 3, les circuits des électrovannes et du contacteur sont réalisés en parallèle.

Toutefois, dans un autre mode de réalisation, le pilotage des électrovannes peut se faire depuis l'activation du contacteur.

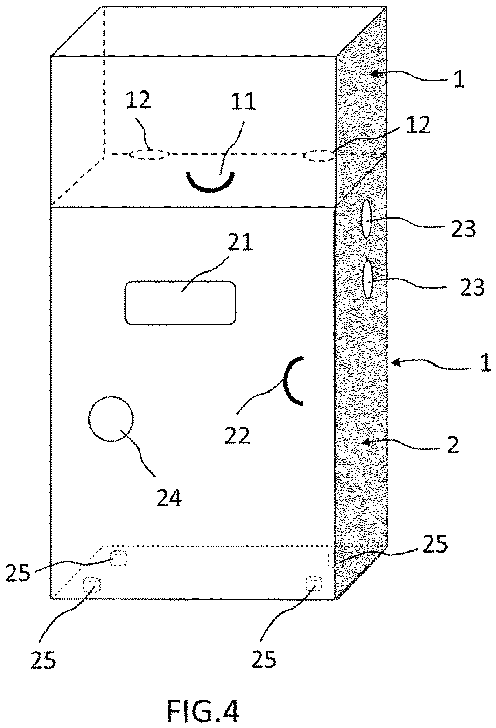

La figure 4 représente un exemple de réalisation du système d'invention de l'invention comportant des ouvertures 23, 24 pour la connexion de tuyaux pour acheminer les volumes d'air prélevés et les volumes d'air traités.

Une partie supérieure 1 forme un caisson permettant de stocker les composants électroniques notamment les cartes électroniques et les équipements électriques pour permettre notamment de commander la régulation et effectuer les calculs visant à asservir les équipements hydrauliques et de traitements des fluides sur une consigne prédéfinie. Selon un exemple, le caisson 1 comprend une poignée 11 et des charnières 12 pour maintenir le caisson au-dessus d'un bâti 3 destiné à comprendre les équipements hydrauliques et les équipements permettant la circulation des fluides, notamment des volumes d'air à traiter. Le bâti 2 est muni d'une poignée 22 et d'un écran d'affichage 21 permettant de contrôler la pression de consigne et la pression de chaque espace dans lequel la pression est régulée. Selon un exemple, le bâti 2 repose sur des patins 25 de positionnement permettant de stabiliser le bâti 2 sur un sol.

Selon un exemple la sortie 24 est une entrée d'air muni d'une grille de filtrage. Un canal d'acheminement (non représenté) peut être connecté à l'entrée d'air afin de traiter ce volume d'air dans les équipements hydrauliques L'air entrant est traité de manière à modifier la pression en sortie 23 d'un volume d'air qui est acheminé dans un espace donné.

Selon un exemple, le système comprend une sortie d'air 23. Selon d'autres variantes de réalisation, le système comprend plusieurs sorties 23 d'air qui permettent d'acheminer dans différents espaces l'air ayant une pression donnée à partir de différents canaux d'acheminement (non représentés). La pression de l'air en sortie permet d'atteindre alors une pression de consigne dans les différents espaces adressés.

Les équipements hydrauliques peuvent comprendre des vannes, électrovannes, aspirateur, souffleur, ventilateur, etc. selon la configuration et le dimensionnement du système.

Les équipements électroniques et électriques du caisson 1 peuvent comprendre de manière non limitative des cartes électroniques, des contacteurs, des relais, des câblages, etc.

Selon un exemple, le caisson 1 comprend une carte électronique pour récupérer des valeurs de pressions mesurées par des capteurs disposés dans différents espaces afin de réguler les équipements hydrauliques et de traitements des fluides.

Selon un exemple, le caisson 1 comprend une carte électronique et des moyens logiciels permettant de détecter des états, notamment d'ouverture ou de fermeture de porte ou de fenêtre d'un espace à partir d'un ou de plusieurs équipements connectés permettant de collecter les états relevés d'un capteur. Ces états peuvent être utilisés pour activer ou désactiver le régulateur de pression.

Selon un exemple, le caisson 1 comprend une horloge permettant de commander des commandes d'activation et de désactivation de la régulation du système selon l'heure ou la date.

## Revendications

1. Système de régulation des variations de pressions atmosphériques **caractérisé en ce qu'**il comporte un aspirateur d'air (A₁) et une souffleuse d'air (S₁) et un capteur de pression (C₁) mesurant une pression à intervalles réguliers et délivrant ladite mesure à un calculateur (K₁) de manière à enregistrer lesdites valeurs dans une mémoire d'un équipement électronique, **caractérisé en ce que** ledit système de régulation comprend une unité de commande (UC₁) pour activer l'aspirateur (A₁) lorsque la pression mesurée est supérieure à un premier seuil de pression (P₁) et pour activer le souffleur (S₁) lorsque la pression mesurée est en dessous d'un second seuil de pression (P₂), lesdits seuils (S₁, S₂) étant déterminés pour assurer le maintien d'une pression mesurée dans une première gamme (G₁) de [980 ; 1050 hPa] dont les bornes correspondent respectivement au second seuil (S₂) et au premier seuil (S₁).

2. Système de régulation selon la revendication 1 **caractérisé en ce qu'**il comprend une console de paramétrage comportant un afficheur, un calculateur et une mémoire, ladite console de paramétrage permettant de configurer la largeur de la gamme de pression définissant le premier seuil (S₁) et le seconde seuil (S₂).

3. Système de régulation selon la revendication 2 **caractérisé en ce que** la console de paramétrage permet de configurer la consigne de pression atmosphérique selon l'altitude à laquelle est positionnée le système.

4. Système de régulation selon la revendication 3 **caractérisé en ce qu'**une position et/ou une altitude du système est configurée et qu'un calcul automatique de la pression atmosphérique et d'une gamme de valeurs du premier seuil et du second seuil est automatiquement calculée pour la consigne de pression atmosphérique définie.

5. Système de régulation selon la revendication 3 **caractérisé en ce qu'**il comporte au moins deux capteurs de pressions agencés dans deux pièces différentes, et au moins deux ensembles, chaque ensemble comportant une souffleuse d'air (S1) et un aspirateur d'air (A1), l'unité de commande asservissant le fonctionnement de chaque équipement de chaque ensemble selon le résultat d'une comparaison entre la pression mesurée à intervalles réguliers de chaque capteur de pression et des seuils de deux gammes de pressions associés à chaque capteur de pression, les deux gammes pouvant être configurées avec des bornes différentes.

6. Système de régulation selon l'une quelconque des revendications précédentes **caractérisé en ce que** le capteur de pression est un pressostat ou un baromètre.

7. Système de régulation selon l'une quelconque des revendications précédentes **caractérisé en ce que** les seuils (P₁, P₂) sont déterminés pour assurer le maintien d'une pression dans une seconde gamme de [1005 ; 1025 hPa] dont les bornes correspondent respectivement au second seuil (S₂) et au premier seuil (S₁).

8. Système de régulation selon l'une quelconque des revendications 1 à 6 **caractérisé en ce que** les seuils (P₁, P₂) sont déterminés pour assurer le maintien d'une pression dans une seconde gamme de [1010 ; 1020 hPa] dont les bornes correspondent respectivement au second seuil (S₂) et au premier seuil (S₁).

9. Système de régulation selon l'une quelconque des revendications précédentes **caractérisé en ce que** l'aspirateur (A₁) est alimenté par une source d'énergie dont la gamme de puissance est comprise dans la gamme : [1200 ; 1600 Watts].

10. Système de régulation selon l'une quelconque des revendications précédentes **caractérisé en ce que** l'unité de commande (UC₁) comprend une interface de communication permettant de recevoir une donnée numérique d'état (ETAT₁) provenant d'au moins un capteur mesurant l'ouverture ou la fermeture d'une fenêtre ou d'une porte, ladite unité de commande (UC₁) activant ou désactivant le système de régulation selon la valeur d'état mesurée.

11. Système de régulation selon l'une quelconque des revendications précédentes **caractérisé en ce qu'**il comprend un terminal électronique comportant une interface sans fil, ladite interface sans fil permettant d'associer des configurations d'allumage ou d'éteinte automatique du système de régulation ou d'un ou plusieurs équipements du système de régulation selon une valeur d'une consigne numérique générée à partir de la mesure d'un capteur d'état.
